Europäisches Patentamt

European Patent Office

Office européen des brevets

(11) Numéro de publication : **0 553 245 B1**

(12)    **FASCICULE DE BREVET EUROPEEN**

(45) Date de publication du fascicule du brevet :
**14.12.94 Bulletin 94/50**

(51) Int. Cl.$^5$ : **G01V 3/12**

(21) Numéro de dépôt : **91919597.4**

(22) Date de dépôt : **14.10.91**

(86) Numéro de dépôt international :
**PCT/FR91/00800**

(87) Numéro de publication internationale :
**WO 92/07286 30.04.92 Gazette 92/10**

(54) **DISPOSITIF DETECTABLE POUR L'IDENTIFICATION D'OBJETS OPTIQUEMENT INVISIBLES.**

(30) Priorité : **15.10.90 FR 9012930**

(43) Date de publication de la demande :
**04.08.93 Bulletin 93/31**

(45) Mention de la délivrance du brevet :
**14.12.94 Bulletin 94/50**

(84) Etats contractants désignés :
**AT BE CH DE DK ES FR GB GR IT LI LU NL SE**

(56) Documents cités :
**EP-A- 0 247 854
EP-A- 0 268 420
WO-A-91/04503
FR-A- 2 476 327
FR-A- 2 531 234
FR-A- 2 538 879**

(73) Titulaire : **PLYMOUTH FRANCAISE
21 allée du Rhône
F-69320 Feyzin (FR)**

(72) Inventeur : **BUI DUC, Hao
1, rue d'Hanoi
F-69006 Lyon (FR)**
Inventeur : **VILLERMAIN-LECOLIER, Gérard
31, bld du Général Leclerc
F-51100 Reims (FR)**

(74) Mandataire : **Bratel, Gérard et al
Cabinet GERMAIN & MAUREAU
B.P. 3011
F-69392 Lyon Cédex 03 (FR)**

## Description

La présente invention est relative à un dispositif détectable pour l'identification d'objets optiquement invisibles tels que des canalisations enterrées ou des objets noyés dans des ouvrages de génie civil, ce dispositif étant associé à l'objet à identifier et comportant des éléments de codage détectables à distance qui correspondent d'une manière univoque à cet objet. Le dispositif détectable en question est ainsi porteur d'un code particulier, désignant l'objet à identifier, qui est susceptible d'être reconnu par un appareil de détection spécifique.

A l'heure actuelle, la signalisation et le repérage des conduites souterraines sont habituellement assurés par l'utilisation de dispositifs avertisseurs qui sont en général enterrés au-dessus de celles-ci lors de leur pose. Ces dispositifs avertisseurs se présentent le plus souvent sous la forme de grillages souples réalisés en matières plastiques comportant, entre autres, des éléments de signalisation susceptibles, lors de fouilles, d'être rompus avec la structure initiale de l'ensemble tout en conservant, au moins sur une certaine longueur, pratiquement leurs formes d'origine, ce qui leur permet d'être parfaitement visibles tant dans le godet de la pelleteuse utilisée que sur les parois des tranchées ainsi creusées.

En complément de cette signalisation visuelle, il existe d'autres techniques de repérage qui sont de plus en plus appliquées à l'échelle industrielle et basées essentiellement sur la détection soit d'éléments conducteurs linéaires (systèmes continus), soit de circuits de résonance (systèmes discontinus).

Dans le premier cas, il s'agit de produits dotés de fils ou de rubans métalliques, isolés ou non, qui sont fixés sur des supports constitués par les dispositifs avertisseurs eux-mêmes. La détection consiste alors à capter le champ électromagnétique créé par un courant alternatif circulant dans l'élément conducteur du dispositif avertisseur considéré, courant obtenu soit par injection directe à l'aide d'un générateur de tension soit par induction lorsqu'un contact direct avec l'élément conducteur n'est pas possible. Un système de ce genre ou analogue, est décrit dans le brevet français N° 2 165 781 (DELEAGE).

Cette technique nécessite un circuit fermé donc un retour par la terre du courant à identifier tout en maîtrisant au mieux le phénomène de déperdition, ce qui implique que l'élément conducteur ne doit en aucun cas être totalement recouvert de matière isolante. Il en résulte que les parties non isolées du conducteur sont inévitablement soumises aux réactions de dégradation dont notamment la corrosion, étant donné la diversité de la nature des sols qui sont loin d'être inertes ni chimiquement, ni électrochimiquement. C'est là une des limites des produits détectables actuels appartenant à cette première catégorie.

Un deuxième inconvénient lié à ce type de produit réside en ce que celui-ci est rendu inopérant en cas de rupture de l'élément conducteur sur une distance donnée. En effet, le courant électrique ne pourra alors plus se propager sur tout le réseau de dispositif avertisseur détectable qui aura été préalablement enterré. Dans la pratique, les causes d'une coupure sont fréquentes et multiples :

- défaut de qualité de l'exécution de l'opération de jonction consistant à relier une extrémité d'un élément conducteur à une autre lors de la pose ;
- négligence et non respect de la nécessité de rétablir la continuité des éléments conducteurs à la suite des travaux de fouille sur un chantier donné ;
- ou n'importe quelle autre défaillance mécanique et/ou chimique conduisant à une dégradation voire destruction, ne serait-ce qu'en un seul point, du réseau de conducteur considéré.

La troisième difficulté que l'on rencontre lors de l'utilisation de ces dispositifs avertisseurs détectables réside en ce que, de par le principe de fonctionnement même du système, le champ électromagnétique à détecter est souvent perturbé par la présence de champs électromagnétiques environnants, notamment en milieu urbain où foisonnent, parfois dans un faible rayon, un certain nombre de circuits de câbles d'électricité et de télécommunication par exemple. Cet effet parasite est en soi gênant, voire rédhibitoire, car lors des recherches en mode d'induction, le couplage avec les lignes et conduites métalliques avoisinantes est un phénomène qui croît rapidement avec la fréquence utilisée dont l'augmentation hélas sera d'autant plus nécessaire que la dimension de l'élément conducteur propre au dispositif avertisseur sera petite.

Dans le même ordre d'idées, la détection de tels conducteurs dépend également de la conductivité du sol, ce qui pose des problèmes d'efficacité et de reproductibilité en fonction de la composition et du taux d'humidité souvent changeant du terrain à explorer.

La dernière limite de ces produits est relative à la non sélectivité de leur identification notamment en cas de présence concomitante de plusieurs réseaux souterrains sur le même site. Même si l'on suppose théoriquement qu'une détection soit effectivement réalisable, dans ce cas malgré toutes les difficultés réelles déjà évoquées, il sera alors encore impossible de déterminer la nature des canalisations enterrées auxquelles sont associés les dispositifs avertisseurs de cette première catégorie.

La deuxième catégorie de dispositifs avertisseurs détectables comprend notamment des systèmes discontinus de bobines et de condensateurs noyés dans une masse de matière plastique et se présentant sous une forme de disques ou de cylindres, que l'on peut poser tout au long du réseau à baliser sur le terrain, une réalisation étant décrite dans le document FR-A-2 531 234. Dans cette catégorie, on peut aussi citer les documents EP-A-0247854, EP-A-0268420 et WO-A-9104503.

Compte tenu du fait que ces circuits de résonance LRC réagissent de façon spécifique à des fréquences d'excitation bien définies, ces systèmes, même s'ils peuvent satisfaire au besoin de discrimination sur le terrain, nécessitent toutefois à l'heure actuelle l'acquisition d'autant de détecteurs que de bandes de fréquence adéquates et conduisent ainsi à une multitude d'appareils de détection selon la conception des fabricants.

On connaît encore des dispositifs avertisseurs détectables comprenant des aimants permanents (FR-A-2476327) ou une substance en poudre ou en grenaille (FR-A-2538879), ces dispositifs restant éloignés de la présente invention en ce sens qu'ils n'utilisent pas des éléments continus susceptibles d'être parcourus par des courants électriques.

Afin de remédier à tous les inconvénients décrits précédemment, qui sont liés tant aux dispositifs détectables continus qu'aux systèmes discontinus de circuits de résonance existants, la présente invention propose des moyens de codage propres à identifier des canalisations ou réseaux ou autres objets, ces moyens étant eux-mêmes simples et permettant d'assurer l'identification de divers réseaux au moyen d'un seul et même appareil de détection.

A cet effet, dans le dispositif détectable selon l'invention pour l'identification d'objets optiquement invisibles, appartenant au genre mentionné en introduction, les éléments de codage se présentent sous forme d'une succession linéaire d'éléments de faible épaisseur du genre feuilles détectables par voie électromagnétique, formant chacun une surface de dimensions prédéterminées et disposés sur ou dans un support protecteur électriquement isolant, ces éléments étant séparés les uns aux autres par des intervalles également de valeur prédéterminée.

Ainsi, les éléments de codage sont positionnés tout au long d'un support non conducteur selon un ordre préétabli correspondant à un type particulier de réseau à identifier.

Dans une première forme de réalisation du dispositif détectable selon l'invention, les éléments de codage, en matériau électromagnétiquement actif, se présentent sous la forme de surfaces sensiblement planes et rectangulaires, de longueur et largeur prédéterminées, adaptées notamment pour être disposées sensiblement parallèlement à la direction générale des objets à identifier.

Dans une autre forme de réalisation, les éléments de codage toujours en matériau électromagnétiquement actif se présentent sous la forme de surfaces électriquement conductrices sensiblement cylindriques, coaxiales, de longueur et de diamètre prédéterminés, adaptées notamment pour la détection et l'identification d'objets eux-mêmes cylindriques, tels que canalisations, les éléments de codage entourant partiellement ou entièrement ces objets. Le dispositif détectable peut, dans ce cas, être directement fixé sur une conduite ou un tuyau afin de permettre l'identification d'un tel objet, la forme annulaire des éléments de codage étant parfaitement adaptée aux conduites cylindriques par exemple.

Dans tous les cas, les éléments de codage se présentent avantageusement sous la forme de feuilles souples en matériau électromagnétiquement actif, disposées sur ou dans un support électriquement isolant qui est également souple.

Selon un mode d'exécution simple, les éléments de codage, sous forme de feuilles souples en matériau électromagnétiquement actif, sont disposés sur un support constitué par un simple film en matériau électriquement isolant.

Dans un autre mode d'exécution, propre à assurer une meilleure protection des éléments de codage toujours réalisés sous forme de feuilles en matériau électromagnétiquement actif, ces dernières sont disposées entre deux ou plusieurs films ou parties de films en matériau électriquement isolant, entourant entièrement lesdits éléments de codage.

De préférence, pour constituer un dispositif avertisseur à signalisation visuelle adaptable aux besoins des utilisateurs dans le domaine des travaux publics, le support des éléments de codage, réalisé sous la forme de deux ou plusieurs films ou parties de films entourant ces éléments de codage, porte aussi des éléments de signalisation visuelle réalisés, de manière connue en soi, sous forme de rubans ou de tronçons de rubans retenus à l'intérieur de gaines.

Le système de codage choisi peut prévoir que les éléments de codage/caractéristiques, et les intervalles séparant ceux-ci des éléments de référence, possèdent des longueurs égales à des multiples de la demi-longueur d'un élément de codage de référence.

Un premier élément dit de référence ayant une longueur constante donnée, on conçoit que la longueur de l'élément caractéristique, ainsi que la position de celui-ci par rapport à l'élément de référence, permettent de définir de façon précise et unique le code correspondant à l'objet à identifier que l'on souhaite lui associer. Le code ainsi déterminé forme un motif géométrique qui se répète périodiquement, et l'on peut définir par le système simple défini plus haut un certain nombre de codes tous différents les uns des autres, avec des longueurs maximales de la "période" du motif n'excédant pas un multiple relativement petit de la demi-longueur de l'élément de référence. Ceci est important pour les applications pratiques sur le terrain, nécessitant le plus souvent de courtes périodes, de deux à trois mètres au maximum.

Selon une caractéristique complémentaire de l'invention, les éléments de codage comprennent des surfaces ayant au moins deux caractéristiques de réponse électromagnétique distinctes l'une de l'autre, et sont notamment des éléments de codage réalisés dans deux matériaux distincts, ce qui accroît considérablement les possibilités de codage, la discrimination étant alors possible non seulement selon le motif géométrique des éléments de codage mais aussi en fonction de la nature des matériaux utilisés pour réaliser ces éléments.

Un avantage supplémentaire du dispositif détectable objet de l'invention est qu'en cas de coupure survenue sur une certaine partie de ce dispositif, l'identification peut toujours s'effectuer sur une partie non détruite formée par les éléments de codage, qui se répètent périodiquement comme indiqué plus haut, contrairement au cas des systèmes classiques de détection à courants de Foucault qui est tributaire de la continuité d'un élément conducteur linéaire sur toute la longueur du dispositif détectable. Il s'agit là d'un avantage important, rendant l'application du dispositif détectable selon l'invention quasiment universelle dans la pratique, d'autant plus que ce dispositif est parfaitement protégeable contre toute cause de dégradation, telle que la corrosion, par des films ou parties de films isolants, comme déjà mentionné plus haut. Il est à noter que les films protecteurs, qui sont de préférence des films thermoplastiques, peuvent être scellés par des techniques courantes de collage ou de soudage, telles que par exemple les procédés par voie thermique, ultrasons, haute fréquence, etc., les feuilles des éléments de codage se trouvant alors totalement isolées du milieu extérieur sans perdre leurs propriétés électromagnétiques autorisant leur détection à distance jusqu'à une certaine profondeur. Les éléments de codage, portés et entourés par leur support protecteur électriquement isolant, forment de véritables "étiquettes" signalétiques qui peuvent elles-mêmes être posées ou soudées sur des supports tels que d'autres films ou des grillages, de préférence de même nature chimique que les films protecteurs utilisés. Par ailleurs, la souplesse de ces films et des éléments de codage eux-mêmes, réalisés sous la forme de feuilles de faible épaisseur, permettent de livrer des produits de grande longueur sous la forme compacte de rouleaux, incorporant le code sur toute leur longueur.

De toute façon, l'invention sera mieux comprise à l'aide de la description qui suit, en référence au dessin schématique annexé représentant, à titre d'exemples non limitatifs, quelques formes d'exécution de ce dispositif détectable pour l'identification d'objets optiquement invisibles :

Figure 1 est une vue en coupe transversale d'un dispositif détectable conforme à la présente invention, incorporé à un dispositif avertisseur à signalisation visuelle ;

Figure 2 est une vue en coupe horizontale, suivant II-II de figure 1 ;

Figure 3 est une vue en coupe similaire à figure 1, montrant une variante de dispositif avertisseur incorporant le dispositif détectable selon l'invention ;

Figure 4 est une vue en perspective, illustrant une autre variante du dispositif détectable objet de l'invention ;

Figures 5 à 8 sont des vues très schématiques, en plan, montrant plusieurs exemples de codes.

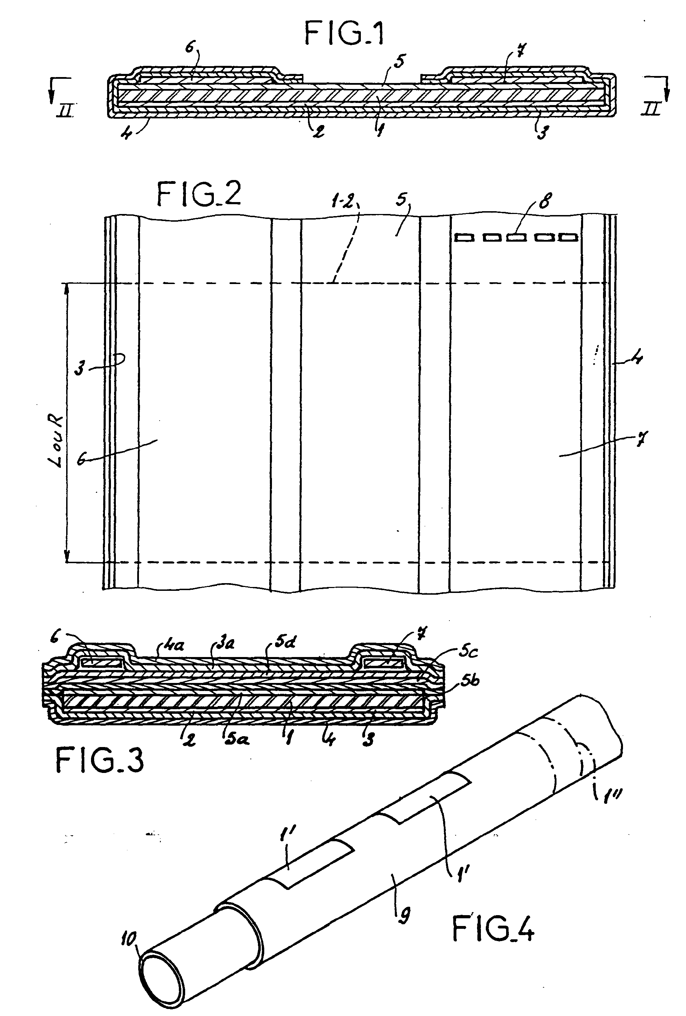

Comme le montrent les figures 1 et 2, relatives à un mode de réalisation particulier, le dispositif détectable objet de l'invention comprend des éléments de codage 1 incorporés à un complexe multicouche, formant ce qu'il est convenu d'appeler un dispositif avertisseur.

Chaque élément de codage 1 se présente sous la forme d'une feuille métallique rectangulaire de faible épaisseur, par exemple une feuille d'aluminium. La feuille métallique 1 est scellée sur un film 2 en matériau thermoplastique tel que polyéthylène, ou copolymère à base de polyéthylène, découpé aux mêmes dimensions que la feuille métallique 1, dimensions qui sont déterminées selon les exigences de codage précisées plus bas dans le cadre de quelques exemples.

Le complexe formé par la feuille métallique 1 et le film 2 est fixé sur un deuxième complexe bi-couche, de longueur indéterminée, formé d'un premier film 3 en matériau thermoplastique tel que polyéthylène et d'un second film 4 en matière synthétique d'une autre nature, telle que polypropylène.

L'ensemble décrit jusqu'ici est recouvert d'un film 5 en matériau thermoplastique tel que polyéthylène, recouvrant notamment la feuille métallique 1 afin d'assurer une étanchéité parfaite.

Le complexe formé par les films 3 et 4 comporte un pliage longitudinal de ses bords, enveloppant deux rubans mobiles 6 et 7 de signalisation visuelle qui ont été précédemment posés au-dessus du film 5. Les deux rubans 6 et 7 se trouvent ainsi retenus à l'intérieur de gaines latérales respectives, formées après soudure longitudinale de la bordure du film 3 du deuxième complexe contre le film 5 recouvrant la feuille métallique 1.

Les rubans de signalisation visuelle 6 et 7 sont avantageusement divisés en tronçons par des prédécoupes 8, ou par des points de faiblesse initialement créés, dans le but de favoriser la rupture de ces rubans lors d'un accrochage par un godet d'engin de terrassement, pour que ceux-ci sortent aisément de leurs gaines et apparaissent dans le godet de l'engin.

Les éléments de codage sous forme de feuilles métalliques 1, fixées sur des films 2 découpés aux mêmes dimensions, se succèdent dans le sens longitudinal selon un motif périodique préétabli, en étant séparés les uns des autres par des intervalles de valeur prédéterminée, pour former un code d'identification tel que précisé plus bas à l'aide d'exemples.

On obtient ainsi un produit compact, parfaitement étanche, renfermant d'une part le code d'identification formé par les feuilles métalliques 1, bien retenues en place aux endroits prévus pour leur positionnement, et d'autre part les deux rubans de signalisation visuelle 6 et 7 qui, eux, peuvent coulisser librement à l'intérieur des gaines latérales correspondantes.

La figure 3 montre, dans une représentation similaire à la figure 1, une première variante se distinguant du précédent mode de réalisation par le fait qu'elle ne comporte pas de pliage longitudinal des films. Les rubans mobiles 6 et 7 de signalisation visuelle sont ici recouverts par un complexe bi-couche 3a,4a, par exemple polyéthylène - polypropylène, qui s'étend sur toute la largeur du dispositif avertisseur. Les feuilles métalliques 1 constituant éléments de codage sont séparées du complexe 3a,4a et des rubans 6 et 7 par une succession de films ou complexes 5a,5b,5c,5d en matériaux thermoplastiques tels que polyéthylène ou polypropylène.

Le produit décrit en référence aux figures 1 à 3 est livrable sous forme enroulée, mais en position d'utilisation il constitue un dispositif avertisseur avec dispositif détectable essentiellement plat, disposé dans le sol à une certaine profondeur, au dessus d'un réseau de canalisations enterrées ou autre, le code particulier porté par le dispositif avertisseur désignant le type de réseau associé, ce code étant susceptible d'être reconnu par un appareil de détection électromagnétique.

La figure 4 illustre une variante dans laquelle le dispositif détectable, toujours formé par des éléments de codage l' électromagnétiquement actifs positionnés sur un support électriquement isolant 9 selon un motif prédéterminé, possède une configuration non plus plane mais cylindrique à l'état posé. Ce dispositif détectable peut ainsi être fixé autour d'une conduite non métallique 10, ou de tout autre objet de forme allongée en matière électriquement isolante, afin de pouvoir identifier cet objet. Les éléments de codage 1' peuvent n'occuper qu'un secteur de la surface cylindrique sur laquelle ils s'inscrivent ; de tels éléments peuvent aussi posséder une configuration annulaire, comme indiquée très schématiquement sur la figure 4 pour un autre élément 1''.

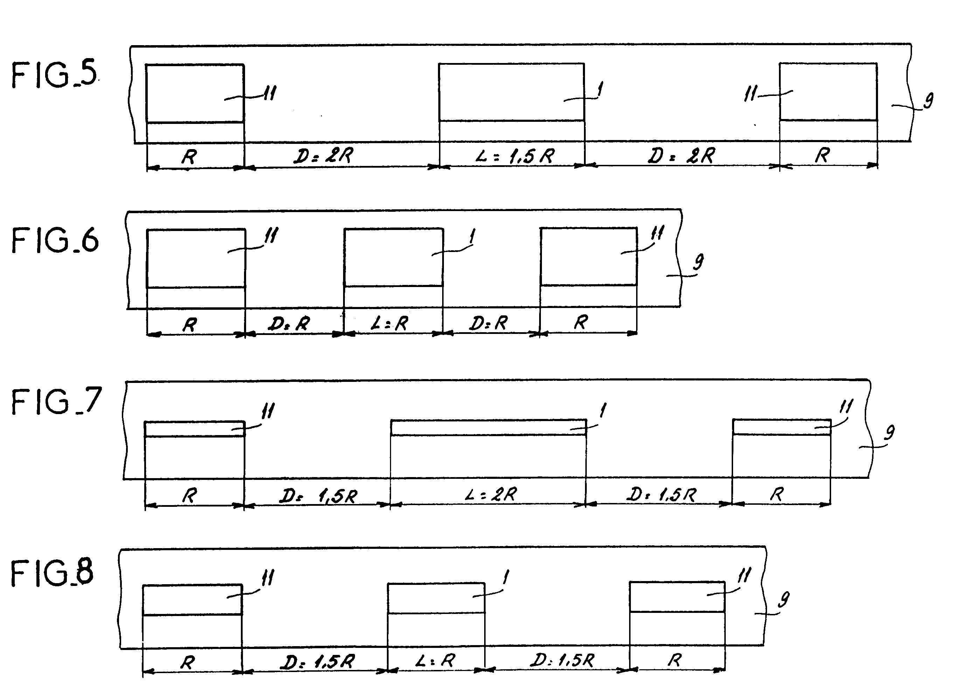

En se référant maintenant aux figures 5 à 8, on décrira quelques exemples de codes, obtenus de façon simple au moyen d'éléments de codage sous forme de feuilles métalliques rectangulaires positionnées sur ou dans un film support ou protecteur 9.

D'une façon générale, et commune à tous les exemples, les éléments constitutifs d'un code sont :
- une feuille métallique rectangulaire 11 constituant un élément de référence, ayant une largeur donnée et une longueur R qui est une constante ;
- une feuille métallique rectangulaire caractéristique 1, de même largeur que l'élément de référence 11, mais de longueur L spécifique, égale à un multiple de la demi-longueur R/2 de l'élément de référence 11 ;
- entre l'élément de référence 11 et la feuille caractéristique 1, un intervalle dont la valeur D est égale, elle aussi, à un multiple de la demi-longueur R/2 de l'élément de référence 11.

Ainsi, à titre d'exemples non exhaustifs, la longueur L de la feuille caractéristique 1 peut être choisie égale à 1.R, 1,5.R, 2.R ou 2,5.R, et l'intervalle peut prendre des valeurs D égales à 1.R, 1,5.R ou 2.R. Ceci conduit à l'obtention de 3 X 4 = 12 codes tous différents les uns des autres, avec un motif simple dont le plus long possède une "période" de :

$$(1 + 2 + 2,5 + 2)R = 7,5.R$$

les onze autres codes ayant par conséquent des longueurs inférieures ou égales à 7.R.

Dans l'exemple de code de la figure 5, la longueur L de la feuille caractéristique 1 est égale à 1,5 fois celle R de l'élément de référence 11, tandis que la valeur D de l'intervalle s'élève à 2 fois la longueur R.

Dans l'exemple de code de la figure 6, la longueur L de la feuille caractéristique 1 est égale à celle R de l'élément de référence 11, et la valeur D de l'intervalle est aussi égale à cette longueur R.

Dans l'exemple de code de la figure 7, la longueur L de la feuille caractéristique 1 est égale à 2 fois celle R de l'élément de référence 11, tandis que la valeur D de l'intervalle est égale à 1,5 fois la longueur R.

Enfin, dans l'exemple de code de la figure 8, la longueur L de la feuille caractéristique 1 est égale à celle R de l'élément de référence 11, mais la valeur D de l'intervalle s'élève à 1,5 fois la longueur L.

Ces quatre codes peuvent être utilisés, par exemple, pour distinguer et identifier respectivement un réseau d'eau potable, un réseau de gaz, un réseau de télécommunications et un réseau de distribution d'électricité, tous souterrains.

Toutefois, une autre application du dispositif détectable ici décrit est l'identification de divers objets invisibles à l'oeil, dans le domaine du bâtiment et plus généralement du génie civil, par exemple le repérage précis d'éléments chauffants souvent noyés dans des dalles, ou le suivi de lignes et de circuits divers, ou autres éléments dissimulés lors de la construction qu'il convient de repérer et d'identifier exactement pour une meilleure sécurité lors des interventions ultérieures.

Le dispositif détectable objet de la présente invention est encore applicable à l'identification et au suivi de déformations ou de déplacements dans le temps de couches superposées dans des ouvrages de travaux publics, tels que les routes et les talus notamment ; on prévoit dans ce cas la mise en place d'au moins un tel dispositif, avec éléments de codage détectables, entre deux couches successives, ce qui permet de suivre l'évolution des couches en mesurant, à l'aide d'un détecteur adéquat, le déplacement relatif des éléments de codage. La grande résistance chimique du dispositif détectable permet ici tout contact avec des matières telles que les bitumes à chaud lors des travaux de pose.

Le dispositif objet de l'invention, détectable à distance par voie électromagnétique, est notamment prévu pour être détecté au moyen d'un dispositif comprenant au moins un enroulement émetteur alimenté par des moyens de génération d'un signal électrique, au moins un enroulement récepteur délivrant un signal modifiable par la présence de ce dispositif détectable, des moyens d'amplification à détection synchrone recevant d'une part le signal issu des moyens de génération précités et servant de référence, d'autre part le signal issu du ou des enroulements récepteurs, et des moyens de traitement du signal fourni par les moyens d'amplification à détection synchrone. Ces moyens de traitement comprennent eux-mêmes des moyens de détection et d'identification du code formé par les éléments de codage précédemment décrits.

Comme il va de soi, et comme il ressort de ce qui précède, l'invention ne se limite pas aux seules formes d'exécution de ce dispositif détectable pour l'identification d'objets optiquement invisibles qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention en retenant d'autres motifs, avec des successions d'éléments et/ou des rapports de dimensions différents, pour la constitution de codes, ou encore en envisageant des réalisations simplifiées, dans lesquelles les éléments de codage sont simplement positionnés sur un film-support en matériau électriquement isolant, sans adjonction de moyens de signalisation visuelle. De même, si ce dispositif détectable est conçu pour l'identification des objets optiquement invisibles, il est a fortiori applicable à des objets optiquement visibles mais non discernables individuellement, tels que par exemple un ensemble de lignes électriques d'apparence identique. Enfin, il va de soi qu'en jouant le rôle d'une "étiquette" spécifique, ce dispositif détectable permet également d'identifier des objets en matière électromagnétiquement active ou électriquement conductrice, lorsque ceux-ci ne se prêtent pas à une discrimination par les techniques de détection actuelles. Dans le cas d'application à un dispositif avertisseur enterré, des perforations peuvent être réalisées d'une manière répétitive dans celui-ci, afin de faciliter le drainage naturel et d'éviter la formation éventuelle de poches d'eau qui risqueraient de modifier sensiblement au cours du temps la position dudit dispositif amortisseur.

## Revendications

1. Dispositif détectable pour l'identification d'objets optiquement invisibles tels que des canalisations enterrées (10) ou des objets noyés dans des ouvrages de génie civil, ce dispositif étant associé à l'objet à identifier et comportant des éléments de codage (1,11) détectables à distance qui correspondent d'une manière univoque à cet objet, caractérisé en ce que les éléments de codage se présentent sous forme d'une succession linéaire d'éléments de faible épaisseur du genre feuilles (1,11) détectables par voie électromagnétique, formant chacun une surface de dimensions (L,R) prédéterminées et disposés sur ou dans un support protecteur électriquement isolant (2 à 5 ; 9), ces éléments (1,11) étant séparés les uns des autres par des intervalles (D) également de valeur prédéterminée.

2. Dispositif détectable pour l'identification d'objets optiquement invisibles, selon la revendication 1, caractérisé en ce que les éléments de codage, en matériau électromagnétiquement actif, se présentent sous la forme de surfaces sensiblement planes et rectangulaires (1,11), de longueur (L,R) et largeur prédéterminées, adaptées notamment pour être disposées sensiblement parallèlement à la direction générale des objets à identifier.

3. Dispositif détectable pour l'identification d'objets optiquement invisibles, selon la revendication 1, caractérisé en ce que les éléments de codage, en matériau électromagnétiquement actif, se présentent sous la forme de surfaces sensiblement cylindriques (1',1''), coaxiales, de longueur et de diamètre prédéterminés, adaptées notamment pour la détection et l'identification d'objets (10) eux-mêmes cylindriques, tels que canalisations, les éléments de codage (1',1'') entourant partiellement ou entièrement ces objets (10).

4. Dispositif détectable pour l'identification d'objets optiquement invisibles, selon l'une quelconque des revendications 1 à 3, caractérisé en ce que les éléments de codage se présentent sous la forme de feuilles souples en matériau électromagnétiquement actif (1,11), disposées sur ou dans un support (2 à 5 ; 9) électriquement isolant qui est également souple.

5. Dispositif détectable pour l'identification d'objets optiquement invisibles, selon la revendication 4, caractérisé en ce que les éléments de codage, sous forme de feuilles souples en matériau électromagnétiquement actif (1,11) sont disposés sur un support (9) constitué par un simple film en matériau électriquement isolant.

6. Dispositif détectable pour l'identification d'objets optiquement invisibles, selon la revendication 4, caractérisé en ce que les éléments de codage, sous forme de feuilles en matériau électromagnétiquement actif (1, 11), sont disposés entre deux ou plusieurs films ou parties de film (2 à 5) en matériau électriquement isolant, entourant entièrement ces éléments de codage (1,11).

7. Dispositif détectable pour l'identification d'objets optiquement invisibles, selon la revendication 6, caractérisé en ce que le support des éléments de codage (1,11), réalisé sous la forme de deux ou plusieurs films ou parties de film (2 à 5) entourant ces éléments de codage, porte aussi des éléments de signalisation visuelle réalisés, de manière connue en soi, sous forme de rubans ou de tronçons de rubans (6,7) retenus à l'intérieur de gaines.

8. Dispositif détectable pour l'identification d'objets optiquement invisibles, selon l'une quelconque des revendications 1 à 7, caractérisé en ce que les éléments de codage/caractéristiques (1), et les intervalles séparant ceux-ci des éléments de référence (11), possèdent des longueurs (L,D) égales à des multiples de la demi-longueur (R/2) desdits éléments de codage de référence (11).

9. Dispositif détectable pour l'identification d'objets optiquement invisibles, selon l'une quelconque des revendications 1 à 8, caractérisé en ce que les éléments de codage (1) comprennent des surfaces ayant au moins deux caractéristiques de réponse électromagnétique distinctes l'une de l'autre, et sont notamment des éléments de codage réalisés dans deux matériaux distincts.

10. Dispositif détectable pour l'identification d'objets optiquement invisibles, selon l'une quelconque des revendications 1 à 9, caractérisé par son application à l'identification et au suivi de déformations ou de déplacements dans le temps de couches superposées dans des ouvrages de travaux publics, notamment par la mise en place d'au moins un tel dispositif avec éléments de codage détectables (1) entre deux couches successives.

**Patentansprüche**

1. Detektierbare Vorrichtung zur Identifikation von optisch unsichtbaren Gegenständen, wie vergrabenen Rohrleitungen (10) oder in Ingenieurbauten eingebetteten Gegenständen, wobei die Vorrichtung mit einem zu identifizierenden Gegenstand verbunden ist und auf Distanz detektierbare Codierungselemente (1, 11) umfaßt, welche diesem Gegenstand in eindeutiger Weise entsprechen, **dadurch gekennzeichnet**, daß die Codierungselemente in Form einer linearen Folge von blattartigen Elementen (1, 11) geringer Dicke vorliegen, welche auf elektromagnetischem Wege detektierbar sind, jeweils eine Fläche vorbestimmter Abmessungen (L, R) bilden und auf oder in einem elektrisch isolierenden Schutzträger (2 bis 5; 9) angeordnet sind, wobei die Elemente (1, 11) voneinander durch Intervalle (D) gleichermaßen vorbestimmten Werts getrennt sind.

2. Detektierbare Vorrichtung zur Identifikation von optisch unsichtbaren Gegenständen, nach Anspruch 1, **dadurch gekennzeichnet**, daß die Codierungselemente aus elektromagnetisch aktivem Material in Form von im wesentlichen ebenen und rechteckigen Flächen (1, 11) vorbestimmter Länge (L, R) und Breite vorliegen, welche insbesondere zur Anordnung im wesentlichen parallel zur Hauptrichtung der zu identifizierenden Gegenstände geeignet sind.

3. Detektierbare Vorrichtung zur Identifikation von optisch unsichtbaren Gegenständen, nach Anspruch 1, **dadurch gekennzeichnet**, daß die Codierungselemente aus elektromagnetisch aktivem Material in Form von im wesentlichen koaxialen zylindrischen Flächen (1′,1″) vorbestimmter Länge und vorbestimmten Durchmessers vorliegen, die insbesondere zur Detektion und Identifikation der ihrerseits zylindrischen Gegenstände (10), wie Rohrleitungen, geeignet sind, wobei die Codierungselemente (1′,1″) diese Gegenstände teilweise oder vollständig umgeben.

4. Detektierbare Vorrichtung zur Identifikation von optisch unsichtbaren Gegenständen, nach einem der Ansprüche 1 bis 3, **dadurch gekennzeichnet**, daß die Codierungselemente in Form von biegsamen Blättern (1, 11) aus elektromagnetisch aktivem Material vorliegen, die auf oder in einem elektrisch isolierenden Träger (2 bis 5; 9) angeordnet sind, der gleichermaßen biegsam ist.

5. Detektierbare Vorrichtung zur Identifikation von optisch unsichtbaren Gegenständen, nach Anspruch 4, **dadurch gekennzeichnet**, daß die Codierungselemente in Form biegsamer Blätter (1, 11) aus elektromagnetisch aktivem Material auf einem Träger (9) angeordnet sind, der von einem einfachen Film aus elektrisch isolierendem Material gebildet ist.

6. Detektierbare Vorrichtung zur Identifikation von optisch unsichtbaren Gegenständen, nach Anspruch 4, **dadurch gekennzeichnet**, daß die Codierungselemente in Form von Blättern (1, 11) aus elektromagnetisch aktivem Material zwischen zwei oder mehreren Filmen oder Filmabschnitten (2 bis 5) aus elektrisch isolierendem Material angeordnet sind, welche diese Codierungselemente (1, 11) vollständig umgeben.

7. Detektierbare Vorrichtung zur Identifikation von optisch unsichtbaren Gegenständen, nach Anspruch 6, **dadurch gekennzeichnet**, daß der Träger der Codierungselemente (1, 11), der in Form von zwei oder mehreren diese Codierungselemente umgebenden Filmen oder Filmabschnitten (2 bis 5) ausgebildet ist, ferner visuelle Signalelemente trägt, die in an sich bekannter Weise in Form von Bändern oder Bandabschnitten (6, 7) ausgebildet sind, die im Inneren von Verkleidungen gehalten sind.

8. Detektierbare Vorrichtung zur Identifikation von optisch unsichtbaren Gegenständen, nach einem der Ansprüche 1 bis 7, **dadurch gekennzeichnet**, daß die Codierungselemente/Merkmale (1) und die diese von Referenzelementen (11) trennenden Intervalle Längen (L, D) aufweisen, die gleich dem Vielfachen der halben Länge (R/2) dieser Referenzcodierungselemente (11) sind.

9. Detektierbare Vorrichtung zur Identifikation von optisch unsichtbaren Gegenständen, nach einem der Ansprüche 1 bis 8, **dadurch gekennzeichnet**, daß die Codierungselemente (1) Flächen umfassen, die wenigstens zwei voneinander verschiedene elektromagnetisch anprechende Merkmale aufweisen, und insbesondere aus zwei verschiedenen Materialien gebildete Codierungselemente sind.

10. Detektierbare Vorrichtung zur Identifikation von optisch unsichtbaren Gegenständen, nach einem der Ansprüche 1 bis 9, **gekennzeichnet** durch ihre Anwendung auf die Identifikation und auf die Verfolgung von allmählichen Verformungen oder Verlagerungen von übereinander angeordneten Schichten in öffentlichen Bauten, insbesondere durch die Anbringung wenigstens einer derartigen Vorrichtung mit detektierbaren Codierungselementen (1) zwischen zwei aufeinanderfolgenden Schichten.

## Claims

1. Detectable device for the identification of optically invisible objects such as buried pipes (10) or objects embedded in civil engineering works, this device being associated with the object to be identified and including remotely detectable coding components (1, 11), which correspond unequivocally to this object, characterised in that the coding components are in the form of a linear sequence of thin components of the sheet type (1, 11) detectable by electromagnetic means, each forming a surface of predetermined dimensions (L, R) and disposed on or in an electrically insulating protective support (2 to 5; 9), these components (1, 11) being separated from each other by intervals (D) which are also of a predetermined value.

2. Detectable device for the identification of optically invisible objects, according to Claim 1, characterised in that the coding components, made of electromagnetically active material, are in the form of substantially flat rectangular surfaces (1, 11), of predetermined length (L, R) and width, adapted notably for being disposed substantially parallel to the general direction of the objects to be identified.

3. Detectable device for the identification of optically invisible objects, according to Claim 1, characterised in that the coding components, made of electromagnetically active material, are in the form of substantially cylindrical coaxial surfaces (1', 1″) of predetermined length and diameter, adapted notably for the detection and identification of objects (10) which are themselves cylindrical, such as pipes, the coding components (1', 1″) surrounding these objects (10) partially or entirely.

4. Detectable device for the identification of optically invisible objects, according to any one of Claims 1 to 3, characterised in that the coding components are in the form of flexible sheets made of electromagnetically active material (1, 11), disposed on or in an electrically insulating support (2 to 5; 9) which is also flexible.

5. Detectable device for the identification of optically invisible objects, according to Claim 4, characterised in that the coding components in the form of flexible sheets made of electromagnetically active material (1, 11) are disposed on a support (9) formed by a simple film made of electrically insulating material.

6. Detectable device for the identification of optically invisible objects, according to Claim 4, characterised in that the coding components, in the form of sheets made of electromagnetically active material (1, 11), are disposed between two or more films or parts of a film (2 to 5) made of electrically insulating material, entirely surrounding these coding components (1, 11).

7. Detectable device for the identification of optically invisible objects, according to Claim 6, characterised in that the support for the coding components (1, 11), made in the form of two or more films or parts of a film (2 to 5) surrounding these coding components, also bears visual signalling components produced, in a manner known per se, in the form of strips or sections of strips (6, 7) held inside sheaths.

8. Detectable device for the identification of optically invisible objects, according to any one of Claims 1 to 7, characterised in that the coding/characteristic components (1), and the intervals separating these from the reference components (11), have lengths (L, D) equal to multiples of half the length (R/2) of the said reference coding components (11).

9. Detectable device for the identification of optically invisible objects, according to any one of Claims 1 to 8, characterised in that the coding components (1) comprise surfaces with at least two electromagnetic response characteristics which are distinct from each other, and are notably coding components made of two distinct materials.

10. Detectable device for the identification of optically invisible objects, according to any one of Claims 1 to 9, characterised by its application to the identification and monitoring of deformations or movements over time of superimposed layers in civil engineering works, notably by placing at least one such device with detectable coding components (1) between two successive layers.

FIG.1

FIG.2

FIG.3

FIG.4

FIG_5

FIG_6

FIG_7

FIG_8